# EUROPEAN PATENT APPLICATION

(11) **EP 1 672 416 A1**
(43) Date of publication of application: **21.06.2006**
(21) Application number: 05111468.4
(22) Date of filing: 29.11.2005
(51) Int. Cl.: G02F 1/1362, G02F 1/13, G02F 1/1333

(54) **Liquid crystal display device and mobile communication unit**

(30) Priority: 17.12.2004 JP 2004365913
(71) Applicant: NEC CORPORATION, Tokyo (JP)
(72) Inventor: MIZUNO, Hiromichi, Shizuoka (JP)
(74) Representative: Betten & Resch

(57) **Abstract**

A liquid crystal display device (LCD) capable of avoiding damage due to external strain and a mobile communication unit using the same are disclosed. The LCD comprises a glass substrate 5 on one surface of which an LCD driver IC 11 is mounted by the COG (Chip On Glass) technique. A metallic light shielding plate 16 having a drawing processed portion 17 is mounted by way of a double-coated tape 16 on the other surface of the glass substrate 5 opposite to the surface on which the LCD driver IC 11 is mounted.

## Description

### FIELD OF THE INVENTION

The present invention relates to a mobile communication unit such as a portable telephone set, a PDA (Personal Digital Assistant), etc. convenient to be carried by the user, more specifically to a liquid crystal display device (LCD) to be installed in such mobile communication unit.

### BACKGROUND OF THE INVENTION

In recent years, needs for mobile communication units such as portable telephone sets, PDAs, etc. are significantly increased and, among other things, portable telephone sets for public communication are widely used by individuals and corporations due to improved communication services and decreased communication charge.

Since recently available mobile communication units are utilized not only for audio transmission but also internet and electronic mails, mobile communication units are made with LCDs having larger display areas in order to increase the number of characters to be displayed thereon. Also, since continued efforts have been made to make the mobile communication unit lighter, thinner and more compact, the LCD occupies a significant portion in area of the entire mobile communication unit.

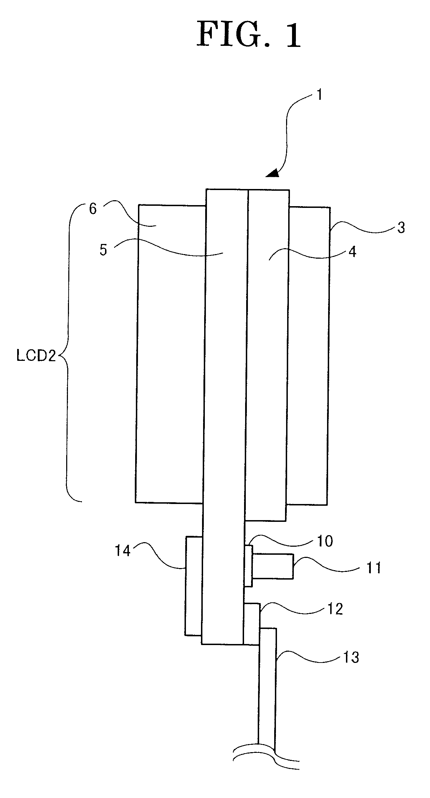

Firstly, a construction of an LCD module to be installed in a conventional mobile communication unit will be made with reference to Fig. 1. It is to be noted that Fig. 1 is a side view of the conventional LCD module 1 to show the construction thereof.

As shown in Fig. 1, the conventional LCD module 1 to be installed in a mobile communication unit comprises a front polarizing plate 3, a front glass 4, a rear glass 5, a rear polarizing plate 6, a light shielding tape 14, an LCD driver IC 11, anACF resin 10 for connecting the LCD driver, an FPC (Flexible Printed Circuit) 13 and an AFC resin 12 for connecting the FCP.

It is to be noted that an LCD 2 comprises the front polarizing plate 3, the front glass 4, the rear glass 5 and the rear polarizing plate 6. A liquid crystal material is filled in the space between the two glass plates comprising the front glass 4 and the rear glass 5. The polarizing plates 3, 6 are adhered onto the assembled front and rear glass plates 4, 5.

In addition, a transparent electrode (ITO) is formed on the inner surface of the assembled glass plates 4, 5.

It is to be noted that the LCD 2 is connected to the LCD driver IC 11 for driving and controlling the LCD. A TAB (Tape Auto Bonding) technology, a COF (Chip On Film) technology, a COG (Chip On Glass) technology or the like is applied to the connection between the LCD 2 and the LCD driver IC 11. Particularly, the COG technology is applied in a portable telephone set because of advantages of thinning the LCD 2 and small required mounting space for the LCD driver IC 11.

Since it is necessary to expose the transparent electrode (ITO) at the mounting electrodes portion for mounting the LCD driver IC 11 on the LCD 2 by utilizing the TAB technology, the COF technology, the COG technology or the like, it is constructed with a single glass plate comprising only the rear glass 5.

In case of utilizing the TAB technology or the COF technology for making an electrical connection between the LCD 2 and the portable telephone set, the LCD 2 is provided with electrodes for making connection with a circuit board inside the portable telephone set.

Also, in case of utilizing the COG technology for making electrical connection between the LCD 2 and the portable telephone set, an FCP 13 is connected to the exposed portion of the transparent electrode of the LCD 2 by way of the ACF resin 12 for connecting the FPC. It is to be noted that the FPC 13 is formed with electrodes for connecting with the circuit board inside the portable telephone set. It is also possible to use a COF (Chip On FCP) as the FCP 13.

Additionally, the LCD 2 comprises an effective display area on which specified displays are guaranteed, active areas within the effective display area for actually providing displays, black matrix areas particular to a TFT or TFD type LCD, a seal area for sealing the two glass plates 4, 5 and a crimping area for connecting the LCD driver IC 11. It is designed that dimensions of the areas other than the active areas are made as small as possible so that the LCD 2 can provide displays as large as possible in a mobile communication unit.

It is to be noted that the LCD module 1 as shown in Fig. 1 is hard to provide sufficient rigidity to the mobile communication unit when it becomes lighter, thinner and more compact, thereby applying strain to the LCD 2 inside the mobile communication unit, in particular concentrating bending strain to the rear glass 5 to which the LCD driver IC 11 is connected by the COG technology by way of the ACF resin 10 for connecting LCD in case of applying mechanical stress such as dropping or bending the mobile communication unit.

At this incidence, there is no possibility that the rear glass 5 is broken because the LCD driver IC 11 has less resistance to bending stress as compared to the rear glass 5. However, the LCD driver IC 11 may be broken or cracked, thereby disabling the LCD 2 to display information.

It is to be noted that there is an earlier patent application disclosing a light shielding label 80 of an aluminum foil having adhesive on the rear surface thereof on the rear portion of the glass substrate 1 at the location where the driving circuit portion of the IC chip 8 is formed in addition to the shielding structure for an outer light 20 by a metal cover 35. The adhered light shielding label 80 shields the outer light 20 from the rear side (see, for example, Japanese utility model publication no. 63-8563).

Also disclosed are simplified steps of light shielding, protecting the terminal portions and reinforcing the connection portion of an LCD made by the COG technique, comprising inserting a light shielding tubular heat shrinkable film 8 into lead-out terminal portion and the IC mounting portion of a substrate 2 on which a driving IC chip 5 is directly mounted and heating the tube for closely attaching the lead-out terminal portion onto the IC mounting portion (see, for example, Japanese patent publication no. 11-24605).

It is to be noted the invention as disclosed in the above utility model publication is directed to light shield the external light rather than protecting the LCD. On the other hand, the above patent publication is directed to simplified steps for light shielding, protection of the terminal portion and reinforcement of the connection portion and is the conventional construction as shown in Fig. 1.

### SUMMARY OF THE INVENTION

The present invention was made in light of the above circumstance and its object is to provide an LCD capable of avoiding damage due to external strain and a mobile communication unit having such LCD installed therein.

In order to achieve the object as described hereinabove, the present invention has the following features.

The LCD according to the present invention is the one comprising a pair of glass substrates adhered to each other by interposing a liquid crystal between them and characterized in that a driving IC for controlling and driving the LCD is mounted on one surface of one of the glass substrates and a metallic light shielding plate for shielding external light is mounted on the other surface of the one of the glass substrates.

In the LCD according to the present invention, it is preferable to perform drawing on the light shielding plate in order to improve its rigidity.

Also in the LCD according to the present invention, the light shielding plate is mounted by way of an adhesive layer on the other surface of one of the glass substrates opposite to the surface on which the driving IC is mounted.

In the LCD according to the present invention, drawing processing is performed in accordance with the shape of the driving IC.

In the LCD according to the present invention, the driving IC is mounted on one surface of the glass substrate by way of the adhesive layer by the COG technique.

The mobile communication unit according to the present invention is characterized in employing the aforementioned LCD.

The LCD and the mobile communication unit according to the present invention are able to prevent the LCD from being damaged by external strain because the LCD comprises a pair of glass substrates which are adhered to each other by way of liquid crystal, a driving IC for driving and controlling the LCD mounted on one surface of one of the glass substrates and a metallic light shielding plate for shielding external light mounted on the other surface of the one glass substrate.

### BRIEF DESCRIPTION OF THE DRAWINGS

In the accompanying drawings,
Fig. 1 shows the construction of a conventional LCD;
Fig. 2 shows the construction of the LCD according to a first embodiment of the present invention; wherein (a) is a front view of the LCD and (b) is a side view of the LCD;
Fig. 3 shows the shape of a drawing processed portion 17 on the metallic light shielding tape as shown in Fig. 2;
Fig. 4 shows the LCD according to a second embodiment of the LCD according to the present invention, wherein (a) is a front view of the LCD and (b) is a side view of the LCD; and
Fig. 5 shows the construction of a drawing processed portion 17 on the metallic light shielding tape 15.

### DESCRIPTION OF THE PREFFERED EMBODIMENTS

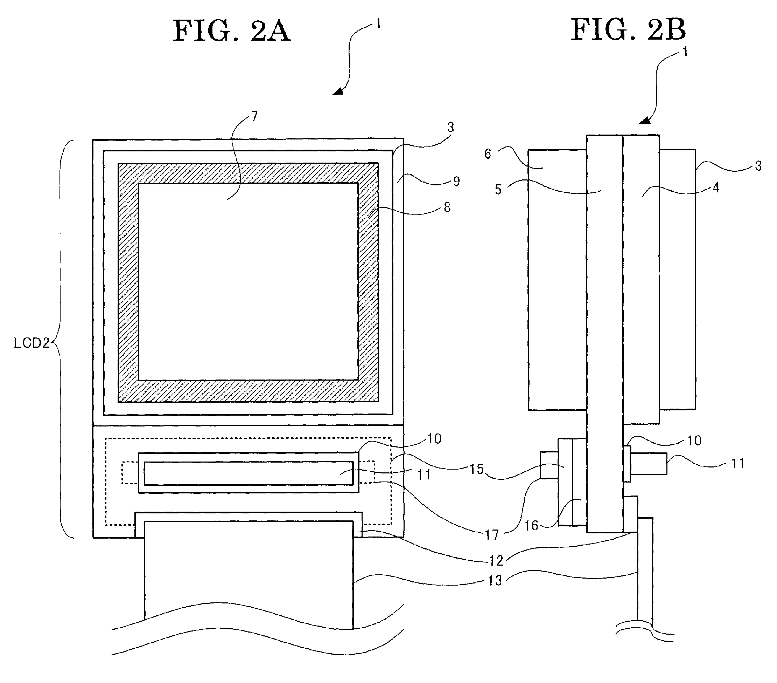

Now, the LCD according to a first embodiment of the present invention will be described with reference to Fig. 2.

The LCD according to the first embodiment of the present invention is constructed by mounting a COG (Chip On Glass) type LCD driver IC 11 on a glass substrate 5 and a metallic light shielding tape 15 having a drawing processed portion 17 on one surface of the glass substrate 5 opposite to the surface on which the LCD driver IC 11 is mounted by way of a double-coated tape 16.

The mobile communication unit installing the LCD is able to avoid any flexure of the glass substrate 5 on which the LCD driver IC 11 is mounted even if any mechanical strain such as dropping shock, bending force, twisting force or the like is applied thereto, thereby effectively preventing the LCD driver IC 11 from being damaged or cracked. The LCD according to the embodiment will now be described in greater detail hereunder with reference to the accompanying drawings.

Firstly, a description will be made on the construction of the LCD according to the embodiment of the present invention with reference to Fig. 2. It is to be noted that Fig. 2 shows the construction of the LCD module 1 according to the embodiment of the present invention, wherein (a) is a front view of the LCD module 1 and (b) is a side view of the LCD module 1.

As shown in Fig. 2, the LCD module 1 according to the embodiment of the present invention comprises an LCD 2, a front polarizing plate 3, a front glass 4, a rear glass 5, a rear polarizing plate 6, an active area 7, a BM (black matrix) area 8, a sealing area 9, ACF resin 10 for connecting LCD driver IC, an LCD driver IC 11, ACF resin 12 for connecting FPC, an FCP 13, a metallic glare shield tape 15 and a double-coated tape 16 for fixing the metallic light shielding tape 15. It is to be noted that a COF (Chip On FPC) may be used as the FPC 13.

It is to be noted that electrical and mechanical connection between the rear glass 5 and the LCD driver IC 11 is made by thermal pressure adhesion of the ACF resin 10 for LCD driver IC connection, which is an anisotropically conductive film.

Also, electrical and mechanical connection between the LCD 2 and the FPC 13 is made by thermal pressure adhesion of the ACF resin 12 for FPC connection, which is an anisotropically conductive film.

In addition, the metallic light shielding tape 15 can be adhered by using the double-coated tape 16 on the surface of the rear glass 5 opposite to the surface on which the LCD driver IC 11 is connected by thermal pressure contact.

It is to be noted that the LCD driver IC 11 may be constructed to make electrical and mechanical connection by thermal pressure contact onto the front glass 4.

The LCD 2 comprises the front polarizing plate 3, the front glass 4, the rear glass 5, the rear polarizing plate 6, the active area 7, the BM area 8 and the sealing area 9. It is to be noted that the active area 7 is an effective display area of the LCD 2.

The conventional LCD module 1 utilizes, as shown in Fig. 1, the light shielding tape 14 for the primary purpose of avoiding any malfunction of the LCD driver IC 11 from external light. Accordingly, a thin black tape made from PET having a tape with adhesive layers on both surfaces is adhered in consideration of cost and working efficiency.

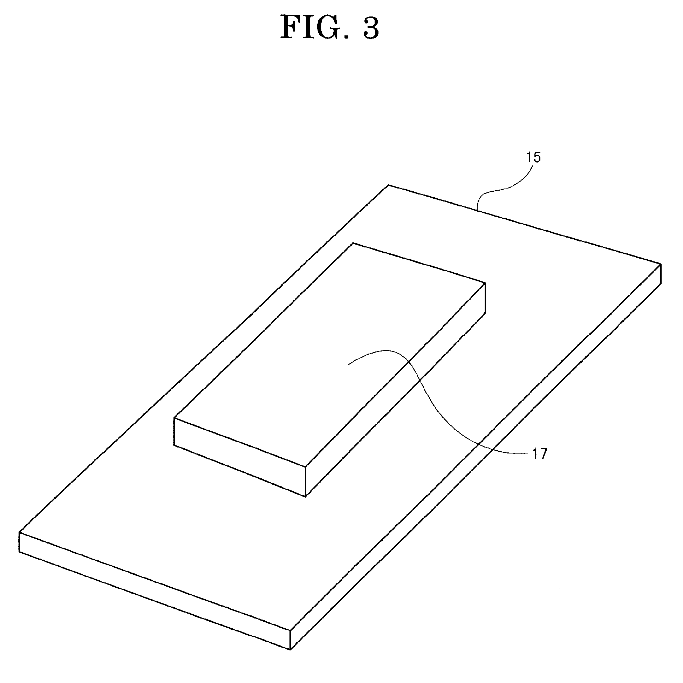

On the contrary, in the LCD module 1 according to the embodiment of the present invention as shown in Fig. 2, the metallic light shielding tape 15 not only shields light but also releases mechanical strain of the LCD 2 caused therein when the mobile communication unit is dropped or bent. Particularly, in order to prevent the LCD driver IC 11 from being broken due to bending of the glass plate 5 on which the COG type LCD driver IC 11 is mounted, metal is chosen as the material of the light shielding tape 15 in addition to forming drawing processed portion 17 as shown in Fig. 3 for improving rigidness of the metal.

Since a thin and flexible material such as black PET or the like having tapes on both surfaces is used as the light shielding tape 14 in the conventional LCD module 1 as shown in Fig. 1, strain is concentrated onto the glass substrate 5 on which the LCD driver IC 11 is mounted when external force is applied by dropping or bending the mobile communication unit, thereby largely bending the glass substrate 5. Accordingly, the LCD driver IC 11 made from silicon material that is less tolerant to bending than the glass substrate 5 may be cracked or broken so that no information is displayed on the LCD 2. In other words, there are many instances that the glass substrate 5 is not cracked but the LCD driver IC 11 is damaged.

In order to solve such problem of the conventional LCD module 1, it is one effective solution to increase the thickness of the glass substrate 5 for improving its rigidness. However, increase the thickness of the glass substrate 5 is in conflict with the trend of developing thinner, lighter and shorter mobile communication units.

For this end, as shown in Figs. 2 and 3, the LCD module 1 according to the embodiment of the present invention improves rigidity to bending force of the glass substrate 5 by the use of a thin metal plate as the material of the light shielding tape 15 and also forming the drawing processed portion 17 with the metallic light shielding tape 15 which is mounted on the glass substrate 5 by way of the double-coated tape 16, thereby improving rigidity to bending force of the glass substrate 5.

Consequently, the mobile communication unit employing the LCD module 1 according to the embodiment of the present invention is capable of restricting bending of the glass substrate 5 by the metallic light shielding tape 15 even if any strain is applied to the glass substrate 5 on which the COG type LCD driver IC 11 is mounted. Thus, bending strain to the LCD driver IC 11 mounted on the glass substrate 5 is released and the LCD driver IC 11 is prevented from being cracked or broken.

It is to be noted that the material of the metallic light shielding tape 15 may be selected from stainless steel, iron, aluminum or the like. It is preferable that the metallic light shielding tape 15 has no burr on the edges or curvature so that it is harmless to the glass substrate 5.

The shape of the drawing processed portion 17 of the metallic light shielding tape 15 may be selected freely based on the shape of the LCD driver IC 11, the number of LCD driver ICs 11, rigidity of the mobile communication unit and results of drop test and strength test of the mobile communication unit.

It is also necessary to design the thickness of the metallic light shielding tape 15 including the drawing processed portion 17 and the fixing double-coated tape 16 not exceed the thickness of the front polarizing plate 3 or the rear polarizing plate 6. This is because the LCD module 1 is mounted by surface contacting or adhering the front polarizing plate 3 (or the rear polarizing plate 6) with the main body of the mobile communication unit. It is to be noted that the double-coated tape 15 can be replaced by adhesive.

As understood from the foregoing, the LCD according to the embodiment of the present invention is able to improve rigidity of the metallic light shielding tape 15 formed with the drawing processed portion 17 by mounting it on the glass substrate 5 using the double-coated tape 16, thereby reducing the amount of bending of the glass substrate 5 and also reducing the bending strain to the LCD driver IC 11. Accordingly, it is possible to prevent the LCD driver IC 11 from being broken or cracked even if any mechanical stress is applied to the mobile communication unit having the LCD installed therein by dropping or bending it.

Now, a second embodiment of the present invention will be described.

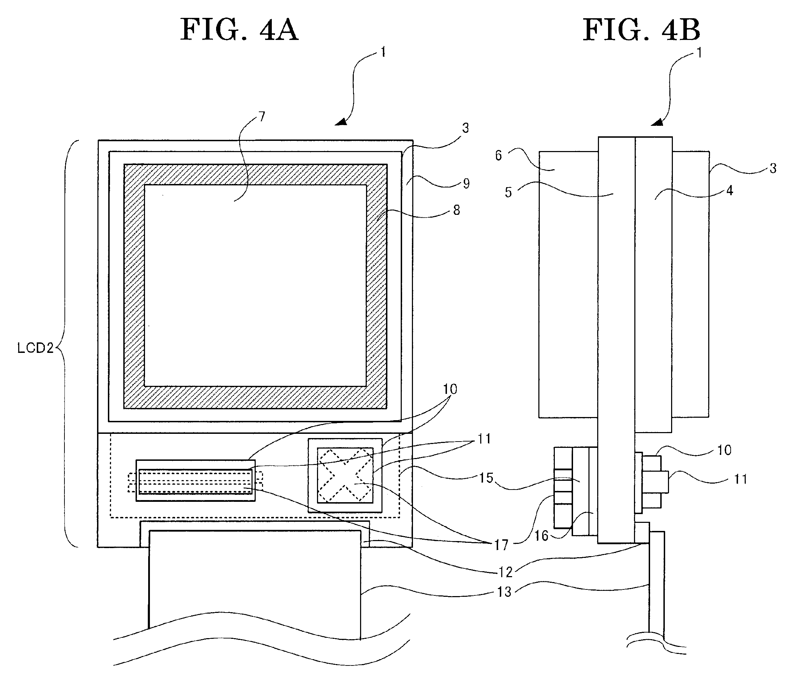

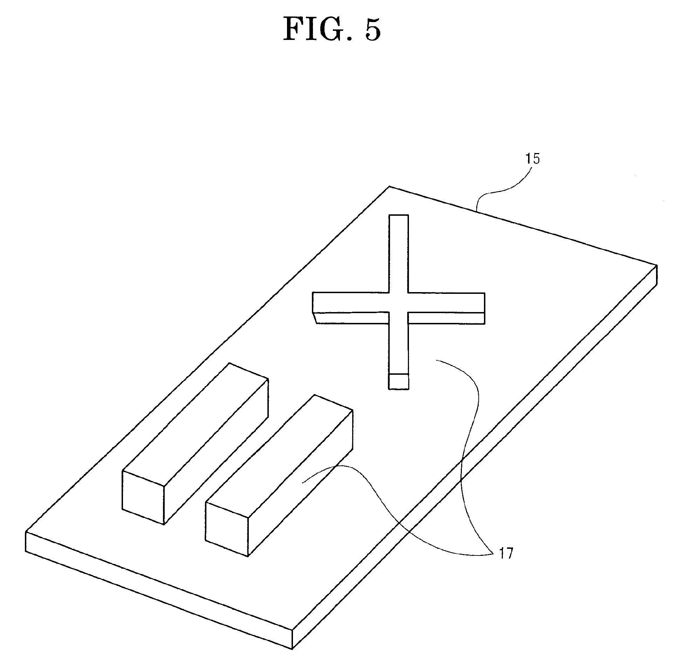

The LCD according to the second embodiment of the present invention features in making the shape of the drawing processed portion 17 in the metallic light shielding tape 15 in accordance with the shape of the LCD driver IC 11. By providing the drawing processed portion 17 in the metallic light shielding tape 15 having the shape in accordance with the shape of the LCD driver IC 11, the LCD according to the second embodiment of the present invention is able to prevent the LCD driver IC 11 from braking or cracking even if mechanical strain is applied to the LCD. A description of the LCD according to the second embodiment of the present invention will be given hereunder with the reference to Figs. 4 and 5. In Fig. 4, (a) is a front view and (b) is a side view of the LCD module 1 in which a pair of LCD driver ICs 11 are installed by the COG technique on the glass plate 5. On the other hand, Fig. 5 is a perspective view of the metallic light shielding tape 15 that is applicable to the LCD module 1 in Fig. 4.

The LCD according to the second embodiment of the present invention features in that the shape of the drawing processed portion in the metallic light shielding tape 15 is optimized in conformity with the shape of each LCD driver 11 as shown in Figs. 4 and 5. Concretely, two linear drawing processed portions 17 are formed for an elongated LCD driver IC 11 while a crossed drawing processed portion 17 is formed for the relatively square LCD driver IC 11.

In this manner, the LCD according to the second embodiment of the present invention is able to further improving the function of preventing the LCD driver ICs 11 from breaking or cracking by providing the drawing processed portion 17 in accordance with the shape of the LCD driver ICs 11.

It is to be noted that the above embodiments are only preferred ones of the present invention and not for restricting the scope and spirit of the present invention. It is therefore possible to make various modifications without departing the scope of the present invention. For example, the LCD according Lo the embodiments of the present invention are not restricted particularly to (STN, TFT or other type) LCD employing the COG technique but may also be applied to organic EL display devices or the like.

The LCD according to the present invention can be applied to portable type mobile communication units such as portable telephone sets, PDAs, etc.
**Several embodiments may be combined with each other. In summary an embodiment of the invention can be described as follows:**

A liquid crystal display device (LCD) capable of avoiding damage due to external strain and a mobile communication unit using the same are disclosed. The LCD comprises a glass substrate 5 on one surface of which an LCD driver IC 11 is mounted by the COG (Chip On Glass) technique. A metallic light shielding plate 16 having a drawing processed portion 17 is mounted by way of a double-coated tape 16 on the other surface of the glass substrate 5 opposite to the surface on which the LCD driver IC 11 is mounted.

## Claims

1. A liquid crystal display device comprising a pair of glass substrates adhered to each other interposing a liquid crystal between them, **characterized in that**:
a driving IC for driving and controlling the liquid crystal display device is mounted on one surface of one of the glass substrates and a metallic light shielding plate for shielding external light is disposed on the other surface of the one glass substrate.

2. A liquid crystal display device of claim 1, wherein a drawing processed portion is formed in the light shielding plate in order to improve rigidity of the light shielding plate.

3. A liquid crystal display device of claim 1 or 2, wherein the light shielding plate is installed by way of an adhesive layer on the surface of the one glass substrate opposite to the surface on which the driving IC is mounted.

4. A liquid crystal display device of claim 2, wherein the drawing processed portion is formed in accordance with the shape of the driving IC.

5. A liquid crystal display device of any of claims 1 to 4, wherein the driving IC is mounted on the one surface of the glass substrate by way of an adhesive layer by the COG technique.

6. A mobile communication unit comprising the liquid crystal display device of either one of claims 1 to 5.
